# EUROPEAN PATENT APPLICATION

(11) **EP 2 497 613 A1**
(43) Date of publication of application: **12.09.2012**
(21) Application number: 12152783.2
(22) Date of filing: 27.01.2012
(51) Int. Cl.: B25J 21/00, B25J 9/00

(54) **Robot surrounded by outer walls**

(30) Priority: 10.03.2011 JP 2011053014
(71) Applicant: Kabushiki Kaisha Yaskawa Denki, Kitakyushu-shi, Fukuoka 806-0004 (JP)
(72) Inventor: Koga, Fumiaki, Kitakyushu-shi, Fukuoka 806-0004 (JP); Kurihara, Teruhiro, Kitakyushu-shi, Fukuoka 806-0004 (JP)
(74) Representative: Grünecker, Kinkeldey, Stockmair & Schwanhäusser

(57) **Abstract**

A production apparatus (1) according to an embodiment includes a robot (12) and outer wall portions (112a to 112d). The outer wall portions (112a to 112d) surround the robot (12) from its lateral sides. Furthermore, at least a part of the outer wall portions (112a to 112d) is provided within the movable range of the robot (12).

## Description

### FIELD

The embodiment discussed herein is directed to a production apparatus.

### BACKGROUND

In recent years, in production plants and such, to respond to rapid changes in the market, a transition from mass production methods such as a line production system to high-mix low-volume production such as a cell production system has been progressed. A cell production system here is a production system where one or more people perform work on a workpiece in a work area called a cell.

Furthermore, production apparatuses in which a robot automatically performs the above-described cell production in place of human beings have been in development recently. For example, Japanese Patent Application Laid-open No. 2006-026777 discloses a production apparatus including a robot and a cell that surrounds the periphery of the robot.

However, there is a room for improvement in terms of downsizing of conventional production apparatuses.

For example, in a conventional production apparatus, a cell is generally designed to be wide enough to contain the movable range of a robot so as to reliably prevent contact of the robot in operation with human beings. Therefore, the size of the production apparatus is not sufficiently downsized.

One aspect of an embodiment is aimed to provide a production apparatus that can achieve downsizing.

### SUMMARY

A production apparatus according to an embodiment includes a robot and outer wall portions. The outer wall portions surround the robot from its lateral sides. Furthermore, at least a part of the outer wall portions is provided within the movable range of the robot.

One aspect of the embodiment provides a production apparatus that can achieve downsizing.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a schematic outline view of a production apparatus according to an embodiment;

FIG. 2 is a schematic top view of the production apparatus according to the embodiment;

FIG. 3 is a schematic side view of the production apparatus according to the embodiment;

FIG. 4A is an enlarged view of an H-portion indicated in FIG. 2;

FIG. 4B is a diagram for explaining a torque control performed by a control device; and

FIG. 5 is a diagram illustrating an example of layout changes of the production apparatuses.

### DESCRIPTION OF EMBODIMENT

With reference to the accompanying drawings, an embodiment of a production apparatus disclosed in the present application will be described in detail hereinafter. However, the invention is not intended to be restricted by the following embodiment described.

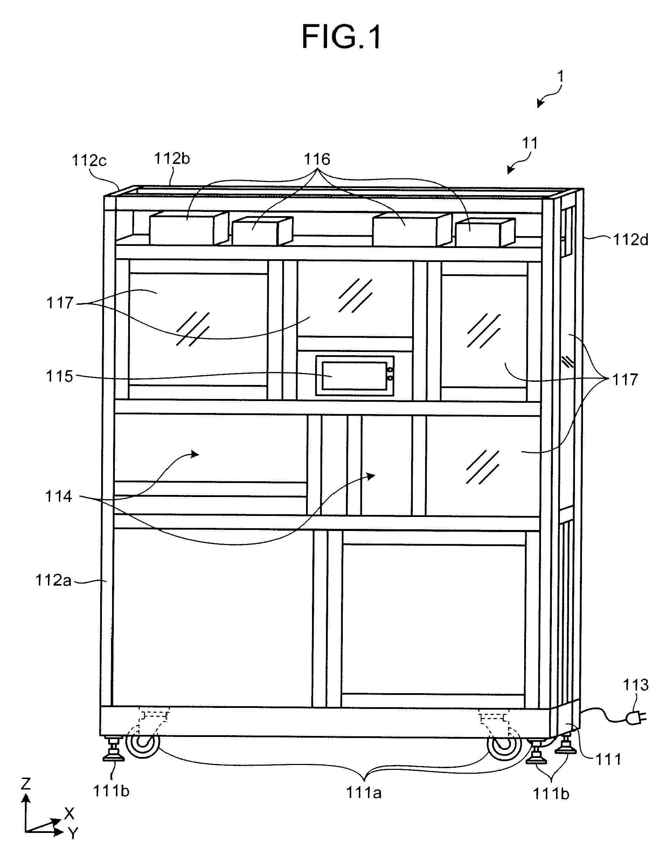

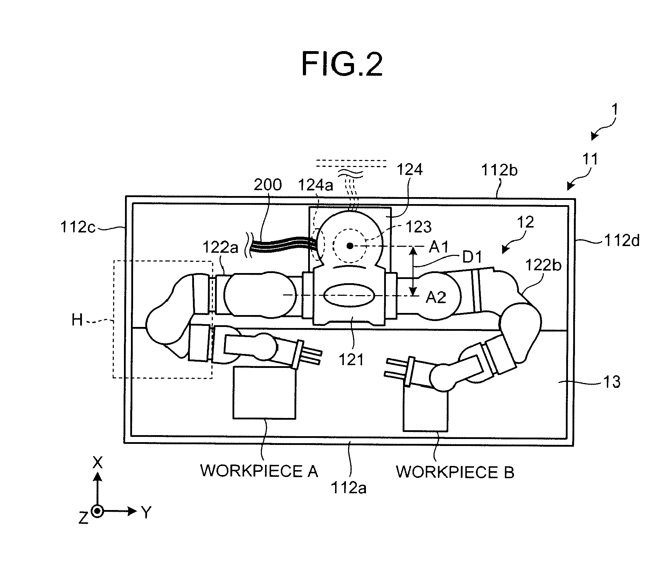

FIG. 1 is a schematic outline view of a production apparatus according to the present embodiment. As illustrated in FIG. 1, a production apparatus 1 according to the embodiment houses a robot 12 (see FIG. 2) inside a cell 11 of a rectangular solid shape. Robot 12 can apply a general standard types of products.

More specifically, the cell 11 includes a rectangular-shaped frame 111 provided with casters (or wheels) 111a and stoppers 111b on the undersurface thereof, and outer wall portions 112a to 112d on the respective sides of the frame 111. The robot 12 is housed in a space formed by the frame 111 and the outer wall portions 112a to 112d.

The production apparatus 1 has the robot 12 and the outer wall portions 112a to 112d on the frame 111 having the casters 111a. Accordingly, an operator and such can easily move the production apparatus 1 to an intended location.

Consequently, for example, a layout change of the production apparatus 1 in a production plant and such can be made easily. Because the stoppers 111b are further provided on the undersurface of the frame 111, the production apparatus 1 can be fixed at a desired position.

In the cell 11, other than the robot 12, all of the various devices necessary for the operation of the production apparatus 1 are housed and thus, the production apparatus 1 can be in an operational state only by connecting a plug 113 for power supply to an external power source. As a consequence, an operator and such can make a change in layout of the production apparatus 1 in a production plant and such more easily.

On the outer wall portion 112a of the front side of the cell 11, openings 114 for taking a workpiece in and out, a monitor 115 to check a working status of the robot 12, various types of instruments 116, switches (not depicted), and the like are disposed in a centralized arrangement. Accordingly, an operator and such can operate the production apparatus 1 only on the front side of the cell 11.

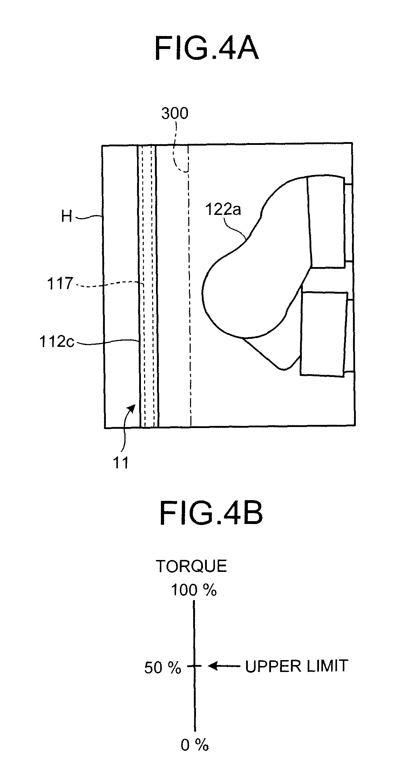

Furthermore, on a part of each of the outer wall portions 112a to 112d, a window portion 117 is provided and thus, an operator and such can see the inside of the cell 11 through the window portions 117. In the present embodiment, the window portions 117 are formed of polycarbonate that is transparent and is of superior impact resistance. This point will be discussed later with reference to FIGS. 4A and 4B.

Meanwhile, a cell is generally designed to be wide enough to contain the movable range of a robot (a maximum range in which the robot can move) to reliably prevent contact of the robot in operation with human beings.

However, in some operations, the range of movement of the robot in operation (hereinafter, referred to as an operating range) is slight, as compared with the movable range of the robot unless the robot is made to order according to demand. In such a case, it can be said that the space inside the cell is uselessly wide with respect to the operating range of the robot.

Accordingly, when the space in the cell of a production apparatus is uselessly wide, in other words, when the size of the apparatus is uselessly large, it is possible that a useless space is taken up in a production plant and such and, furthermore, a lot of effort is needed for the above-described change in layout or the like.

Therefore, the production apparatus 1 according to the present embodiment is provided with the outer wall portions 112a to 112d of the cell 11 within the movable range of the robot 12 so as to achieve downsizing of the production apparatus 1. However, merely narrowing down the space in the cell increases a possibility of the robot 12 contacting the cell 11 when, for example, an abnormal action or something of the robot 12 occurs. For this reason, in the present embodiment, measures to improve safety of the production apparatus 1 are additionally carried out. In the followings, these points will be explained specifically.

In the followings, a depth direction when the production apparatus 1 is viewed from the front is defined as an X direction (Short-side direction of rectangular frame 111). A direction horizontal to a mounting surface of the production apparatus 1 is defined as a Y direction (Short-side direction of rectangular frame 111), and a direction vertical thereto is defined as a Z direction.

FIG. 2 is a schematic top view of the production apparatus 1 according to the present embodiment. As illustrated in FIG. 2, the production apparatus 1 houses the robot 12, a workbench 13, and the like inside the cell 11. As depicted in FIG. 2, the cell 11 is formed into a size slightly larger than the external form of the robot 12. Specifically, the respective outer wall portions 112a to 112d of the cell 11 are set up so as to cover a range narrower than the movable range of the robot 12 but wider than the operating range of the robot 12. The cell 11 being provided within the movable range of the robot 12 in this manner allows the downsizing of the production apparatus 1.

The robot 12 is a so-called dual-arm robot in which a right arm 122a and a left arm 122b are attached to trunk portion 121. The robot 12 is disposed near the outer wall portion 112b in a state of its back side facing the outer wall portion 112b. The right arm 122a and the left arm 122b are each a multi-axis robot (for example, a seven-axis robot), and at the distal end thereof, an end effector appropriate for work is provided.

In the present embodiment, the robot 12 is assumed to carry out work of griping a workpiece A with the right arm 122a and a workpiece B with the left arm 122b, and then press-fitting the workpiece A to the workpiece B. However, the work that the robot 12 carries out is not limited to this. The robot 12 may be further configured to carry out work for a workpiece in cooperation with a work device (not depicted) provided within the cell 11.

The trunk portion 121 of the robot 12 is connected with a base portion 124 via an actuator 123, and rotates centering around a rotation axis A1 of the actuator 123.

The robot 12 here is designed such that the rotation axis A1 of the actuator 123 and attaching positions A2 of the right arm 122a and the left arm 122b with respect to the trunk portion 121 (pivots of the right arm 122a and the left arm 122b) are separated from each other by the amount of D1 in the X direction. In other words, the robot 12 is in a state that the trunk portion 121 is protruded forward with respect to the base portion 124 (a forward bent posture).

With the robot 12 having a forward bent posture in this way, it is possible to move the right arm 122a and the left arm 122b to positions even closer to the base portion 124 as compared with the robot 12 having a standing posture (where A1 and A2 are matched).

The workbench 13 is then arranged in a space formed by such forward bent posture below the trunk portion 121 of the robot 12 (a bosom portion of the robot 12), and the robot 12 carries out the work on the workpieces above the workbench 13, i.e., at the bosom portion near the base portion 124.

By tilting the trunk portion 121 of the robot 12 forward and arranging the workbench 13 below the trunk portion 121, the robot 12 can carry out the work at a position closer to the base portion 124. Accordingly, a clearance between the base portion 124 and the workbench 13 can be reduced and thus, the breadth of the cell 11 in the X direction can be made narrower. As a consequence, a further downsizing of the production apparatus 1 can be achieved.

The base portion 124 of the robot 12 further includes a connector 124a to which a wiring cable 200 from a later-described control device and the like is connected. The connector 124a is provided in a direction facing other than the outer wall portion 112b on the back side of the cell 11, and is provided on the right arm 122a side here.

By providing the connector 124a in a direction facing other than the outer wall portion 112b on the back side of the robot 12, it becomes unnecessary, as indicated by dashed lines in FIG. 2, to secure a space to arrange the wiring cable 200 between the robot 12 and the outer wall portion 112b on the back side of the robot 12.

Consequently, the breadth of the cell 11 in the X direction can be made even narrower, allowing the production apparatus 1 to be further downsized.

While the connector 124a is provided on the right arm 122a side in FIG. 2, the connector 124a may be provided on the left arm 122b side, or may be provided on the front side of the robot 12.

Meanwhile, the robot 12 according to the present embodiment is originally a type of robot that is provided with the connector 124a on the back side of the robot 12. Therefore, the robot 12 is housed in the cell 11 in a state where the trunk portion 121 is rotated by 90 degrees with respect to the base portion 124. However, the robot may be a type of robot with its connector being provided originally in a direction facing other than the back side.

The robot 12 according to the present embodiment is a so-called general-purpose robot. That is, the robot 12 can be mounted in an appropriate position, and the movable range of the actuator 123 is set with the X direction (facing the front) as a center.

For example, the movable range of the actuator 123 of the robot 12 is set to ±180 degrees with the X direction as 0 degree. When mounting the robot 12 to the cell 11, the robot takes posture with the actuator 123 being rotated by about 90 degrees, and the position of the connector is set nearly parallel to the Y direction.

Accordingly, the robot can be suitably used even in an application where the robot is not mounted in the cell 11, and by housing the robot in the cell 11 as in the present embodiment, a more compact cell can be configured.

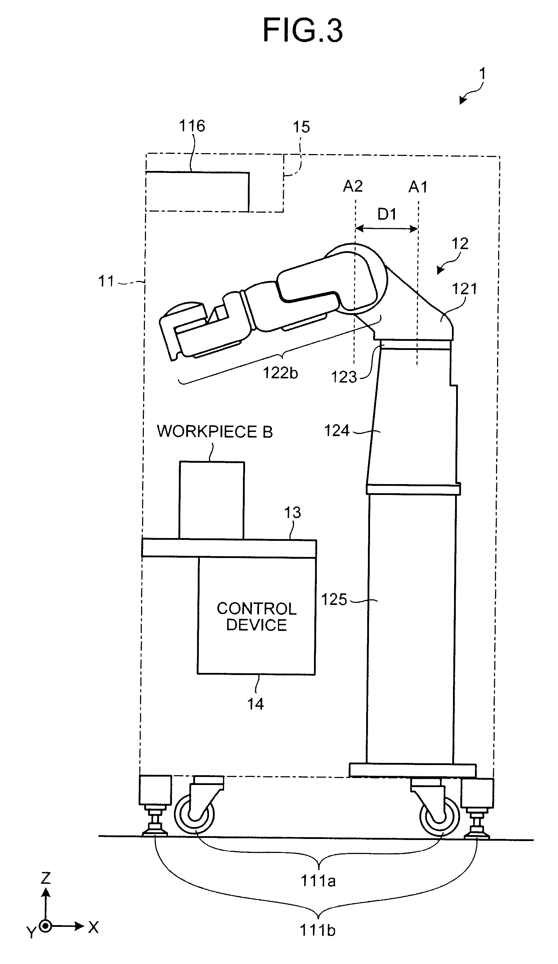

An internal configuration of the production apparatus 1 will be further explained with reference to FIG. 3. FIG. 3 is a schematic side view of the production apparatus 1 according to the present embodiment. In FIG. 3, to make the internal configuration of the cell 11 easier to understand, the shape of the cell 11 is depicted in a simplified manner.

As illustrated in FIG. 3, other than the robot 12 and the workbench 13, a control device 14 that controls the whole production apparatus 1 including the robot 12 is also housed inside the cell 11. The control device 14 carries out, for example, controls to move the robot 12 in accordance with work information registered in advance, controls motion of the end effectors, and such.

The control device 14 is disposed in a dead space formed below the workbench 13. Specifically, the workbench 13 is normally placed at a relatively high position from the mounting surface so that an operator and such can take a workpiece in and out easily. As a consequence, a dead space is formed below the workbench 13.

Therefore, in the production apparatus 1, the control device 14 is disposed under the workbench 13 so as to make efficient use of the dead space formed below the workbench 13. Consequently, a further downsizing of the production apparatus 1 can be achieved.

The production apparatus 1 further includes a mounting rack 15 on which the instruments 116 and the like are placed in the upper part of the cell 11. That is, the mounting rack 15 is provided in a dead space formed above the robot 12 so as to make efficient use of the dead space. Consequently, a further downsizing of the production apparatus 1 can be achieved.

In the cell 11, an adjustment stand 125 is also provided to adjust the height of the robot 12 corresponding to the height of the workbench 13. The adjustment stand 125 is a member in a nearly cylindrical shape having flange portions at both ends, and the flange portion on one end is fixed to a floor surface of the cell 11 (i.e., the frame 111) and the flange portion on the other end is fixed to the base portion 124 of the robot 12.

Next, a configuration to improve safety of the production apparatus 1 will be described with reference to FIGS. 4A and 4B. FIG. 4A is an enlarged view of an H-portion indicated in FIG. 2. FIG. 4B is a diagram for explaining a torque control performed by the control device 14.

As illustrated in FIG. 4A, in the production apparatus 1, a virtual wall 300 is set up on an inner side of the outer wall portions 112a to 112d. The virtual wall 300 is a hypothetical wall to restrict the movement of the robot 12 and is set by the control device 14.

More specifically, the control device 14 controls the robot 12 not to operate beyond the virtual wall 300. Accordingly, because the operation of the robot 12 is restricted not to go beyond the virtual wall 300 even when, for example, an abnormal action or something occurs, the robot 12 can be prevented from contacting the outer wall portions 112a to 112d. While only the virtual wall 300 near the outer wall portion 112c is illustrated in FIG. 4A, the virtual wall 300 is set so as to surround the periphery of the robot 12.

Accordingly, setting the virtual wall 300 and restricting the movable range of the robot 12 to an inner side of the outer wall portions 112a to 112d can reduce the possibility of the robot 12 contacting the outer wall portions 112a to 112d. As a consequence, the safety of the production apparatus 1 can be improved, and the breakage of the outer wall portions 112a to 112d and the robot 12 can also be prevented.

The control device 14 further carries out a process of limiting the working torque of the robot 12 to below a given threshold value. For example, as illustrated in FIG. 4B, the control device 14 limits the working torque of the robot 12 to below 50 percent of a maximum torque. Accordingly, even in the event that the robot 12 should happen to contact the outer wall portions 112a to 112d, the impact that the outer wall portions 112a to 112d or the robot 12 receives can be eased as compared with an occasion where the working torque is not limited.

Furthermore, the window portions 117 provided on the outer wall portions 112a to 112d are formed of polycarbonate of superior impact resistance. Consequently, even in the event that the robot 12 should happen to contact the window portion 117, the window portion 117 is hard to break and a possibility of injury of an operator and such due to broken pieces flying around like glass is low.

As described in the foregoing, in the present embodiment, the virtual wall 300 is set up on an inner side of the outer wall portions 112a to 112d, the working torque of the robot 12 is limited, and the window portions 117 are formed of polycarbonate of superior impact resistance. Consequently, even when the production apparatus 1 is downsized, the safety can be assured.

While the window portions 117 here are formed using polycarbonate of outstanding impact resistance, the window portions 117 may be of high-impact resin other than polycarbonate. For example, high-impact resin other than polycarbonate includes acrylate resin (polymethacrylic acid ester resin), ABS resin, and high-impact polystyrene (HIPS).

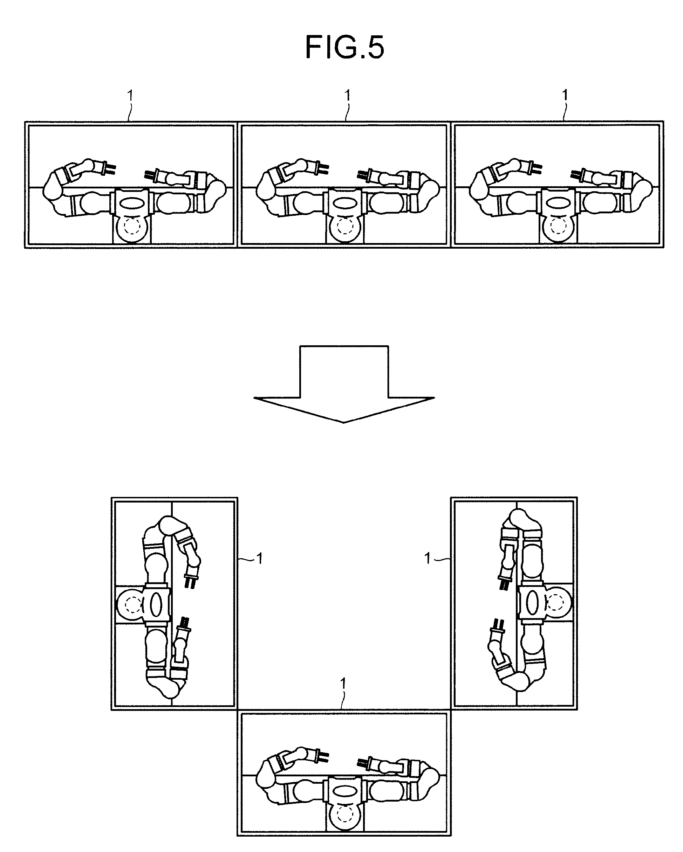

Next, layout changes of the production apparatuses 1 will be described with reference to FIG. 5. FIG. 5 is a diagram illustrating an example of layout changes of the production apparatuses 1.

As illustrated in FIG. 5, it is assumed that, in a production plant and such, a plurality of the production apparatuses 1 are lined side-by-side in a row. As explained above with reference to FIG. 1, the production apparatus 1 here has the openings 114, the monitor 115, the instruments 116, and such being disposed on the front side of the cell 11 in a centralized arrangement.

In other words, because there are no instruments, switches, or the like provided on the side surfaces of the production apparatus 1, the production apparatuses 1 can be lined side-by-side with no space between them when the production apparatuses 1 are disposed in a row. Thus, a space in the production plant and such can be used effectively.

When changing the layout of the production apparatus 1, an operator and such, after taking out the plug 113 from the external power source and releasing the stoppers 111b of the frame 111, moves the production apparatus 1 to a desired location. At that time, as explained above with reference to FIG. 1 and such, the production apparatus 1 has the frame 111 provided with the casters 111a, whereby the operator and such can move the production apparatus 1 easily.

Furthermore, because the production apparatus 1 is designed compact in size compared with conventional apparatuses, the operator and such can move the production apparatus 1 more easily. In FIG. 5, three production apparatuses 1 disposed side-by-side in a row are rearranged in a U-shape.

As described above in the foregoing, in the present embodiment, the production apparatus 1 includes the robot 12 and the outer wall portions 112a to 112d surrounding the robot 12 from its lateral sides, and the outer wall portions 112a to 112d are provided within the movable range of the robot 12. Consequently, in accordance with the present embodiment, the downsizing can be achieved.

Furthermore, in the present embodiment, the control device 14 carries out the process of limiting the working torque of the robot 12 to below a given threshold value and the process of restricting the operating range of the robot 12 to an inner side of the outer wall portions 112a to 112d. Consequently, the downsizing can be achieved while ensuring the safety.

Moreover, in the above-described embodiment, the window portions 117 on the outer wall portions 112a to 112d are formed of high-impact resin, whereby the safety of the production apparatus 1 can be further improved.

While all of the outer wall portions 112a to 112d are provided within the movable range of the robot 12 in the above-described embodiment, the downsizing of the production apparatus 1 can be achieved even when only a part of the outer wall portions 112a to 112d is provided within the movable range of the robot 12.

In the above-described embodiment, to make the production apparatus 1 easy to move, the outer wall portions 112a to 112d and the robot 12 are mounted on the frame 111 having the casters 111a. However, the art is not limited as such and, for example, for a stationary production apparatus that is not necessary to move, the apparatus may not need to include the frame 111.

While the cell is of a rectangular solid shape in the above-described embodiment, the shape of the cell 11 is not limited to this and the cell 11 may be of a cubic shape or of a cylindrical shape.

While the control device 14 carries out both the process of limiting the working torque of the robot 12 to below a given threshold value and the process of restricting the operating range of the robot 12 to an inner side of the outer wall portions 112a to 112d in the above-described embodiment, the control device 14 may be configured to carry out only one of these processes.

While the robot 12 housed inside the cell 11 is a so-called dual-arm robot in the above-described embodiment, the art is not limited as such and the robot may be a single-arm robot.

Meanwhile, the above-described embodiment has been described on the assumption that the positional relation between the robot 12 and the workbench 13 is unchanged. However, for example, when deflection is caused to the frame 111, the positional relation between the robot 12 and the workbench 13 is changed, and thus it is conceivable that the work on the workpieces may not be performed properly.

Therefore, in the production apparatus 1, the frame 111 may be formed of high rigidity metal such as stainless and titanium to make it hard to cause a positional shift of the robot 12. Furthermore, the robot 12 may be provided with an inclinometer to make the control device 14 correct the motion of the robot 12 in response to the measuring result of the inclinometer.

## Claims

1. A production apparatus (1) comprising:
a robot (12); and
outer walls (112a to 112d) surrounding the robot (12) from lateral sides thereof, wherein
at least a part of the outer walls (112a to 112d) is provided within a movable range of the robot (12).

2. The production apparatus (1) according to claim 1, wherein the outer walls (112a to 112d) within the movable range include members of high-impact resin.

3. The production apparatus (1) according to claim 1 or 2, further comprising a controller (14) that carries out either one of or both of a process of limiting a working torque of the robot (12) to below a given threshold value and a process of restricting the an operating range of the robot (12) to an inner side of the outer walls (112a to 112d).

4. The production apparatus (1) according to any one of claims 1 to 3, wherein the robot (12) and the outer walls (112a to 112d) are mounted on a rectangular-shaped frame provided with casters (111a).

5. The production apparatus (1) according to claim 4, wherein
the robot (12) is a dual-arm robot and is disposed near the outer wall (112b) provided on one side of the rectangular-shaped frame with a back side of the robot (12) facing the outer wall (112b), and
a connector (124a) of the robot (12) is provided in a direction facing other than the back side of the robot (12).

6. The production apparatus (1) according to claim 5, wherein
the robot (12) comprises a forward bent trunk portion (121), and
the production apparatus (1) comprises a workbench (13) disposed under the trunk portion (121).

7. The production apparatus (1) according to claim 6, wherein the controller (14) is disposed under the workbench (13).
